# EUROPEAN PATENT APPLICATION

(11) **EP 1 868 272 A1**
(43) Date of publication of application: **19.12.2007**
(21) Application number: 07252452.3
(22) Date of filing: 15.06.2007
(51) Int. Cl.: H02G 3/32, H02G 3/04

(54) **Cable mount for cable trays**

(30) Priority: 15.06.2006 US 804880 P; 12.06.2007 US 761482
(71) Applicant: PANDUIT CORPORATION, Tinley Park, Illinois 60477-3091 (US)
(72) Inventor: Caveney, Jack, E., Hinsdale, Illinois 60521 (US)
(74) Representative: Roberts, Gwilym Vaughan

(57) **Abstract**

A cable mount for carrying a bundle of cables comprises a base comprising a slot for receipt of a cable tie, a shaft connected to the base and a head connected to the shaft, the head for securing the cable mount to a cable tray through an opening. The cable mount may be secured to the tray by rotating the mount less than 180 degrees, such that a length of the head of the cable mount is transverse to a length of the opening in the cable tray. The cable mount is easy to use and may be installed without the use of tools.

## Description

### Field of invention

This invention relates to cable mounts and, more particularly, to cable mounts for supporting bundles of cables running along the top and/or bottom of cable trays.

### Background

Typically, a cable tie is routed through the elongated slots of a cable tray, and then the cable tie secures a bundle of cables. However, after routing the cable tie through the first slot in the cable tray, it is sometimes difficult to route the cable tie back through the second slot in the cable tray.

It would be desirable to provide a cable mount that makes it easier to support bundles of cables running along the top and/or bottom of a cable tray.

### Summary of the Invention

The present invention relates to an improved cable mount for carrying a bundle of cables on a cable tray, the cable mount comprising a slot for receiving a cable tie and a head for securement to a cable tray.

The cable mount comprises a base for carrying a cable bundle, a shaft and a head. The base comprises a top surface, a bottom surface and opposing sidewalls, with the opposing sidewalls defining a slot for receipt of a cable tie. The shaft comprises a top surface and a bottom surface, and the bottom surface of the shaft is connected to the top surface of the base. In one embodiment. the head is connected to the top surface of the shaft and comprises a top surface and a bottom surface, wherein the bottom surface of the head comprises a beveled portion defined by a first surface and a second surface intersecting at an apex and forming an obtuse angle. In another embodiment. the head comprises an angled portion defined by a first surface and a second surface intersecting at an apex. In yet another embodiment. the head is connected to the top surface of the shaft and the cable mount is capable of securement to the cable tray without the use of tools through positioning the head in the opening and rotating the head less than about 180 or no more than about 90 degrees. The head is typically sized and shaped to pass through the opening.

The cable mount may incorporate various additional features. The cable mount may be constructed of plastic or metal. The head and opening may each comprise a length and width. wherein the cable mount is positionable in a first secured position. with the length of the head transverse to the length of the opening, thereby preventing the head from being removed through the opening and a second unsecured position. wherein the length of the head is aligned with the length of the opening. thereby allowing removal of the cable mount from the opening. The first and second surfaces of the head may extend upwardly toward the top surface of the head. Further. a distance measured from the apex of the head to the top surface of the base may be less than a thickness of the cable tray.

### Brief Description of Drawings

Fig. 1 is a bottom perspective view of a cable mount according to the present invention;

Fig. 2 is a bottom perspective view of the cable mount of Fig. 1. being inserted into an opening in a cable tray:

Fig. 3 is a top perspective view of the cable mount of Fig. 2. fully inserted into the opening of the cable tray and rotated 90 degrees:

Fig. 4 is a bottom perspective view of the cable tray. wherein two cable mounts of the present invention are adjacently hung from the cable tray and a cable tie has been inserted through the head:

Fig. 5 is a bottom perspective view of the cable tray. wherein a cable tie is used to secure cables to two cable mounts of the present invention which are in turn secured to the cable tray: and

Fig. 6 is a top perspective view of the cable tray. wherein cables are secured to the top and bottom of the cable tray.

### Detailed Description

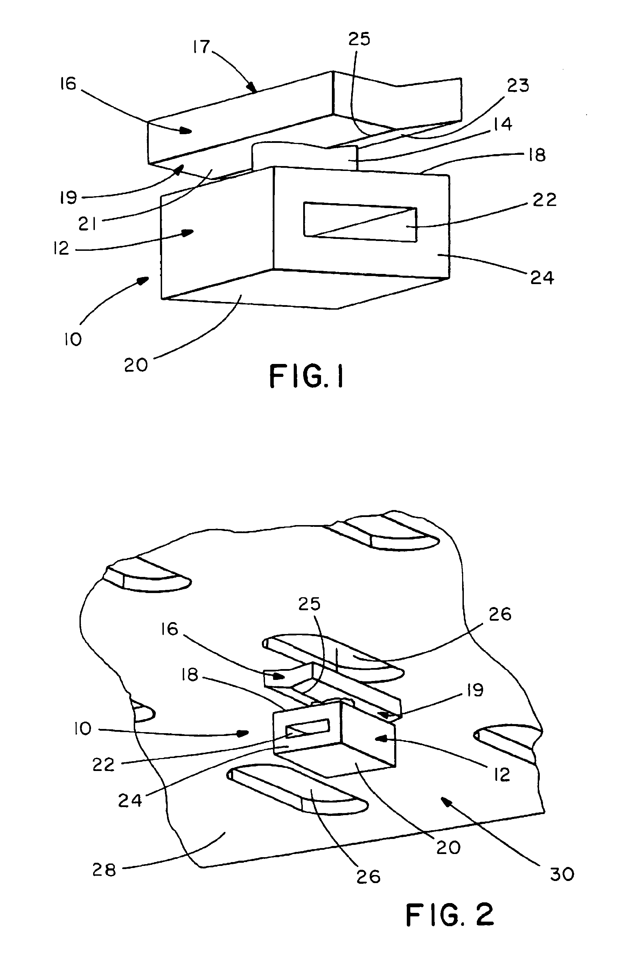

Referring to Fig. 1, one embodiment of the cable mount 10 of the present invention is shown. Cable mount 10 includes base 12, shaft 14. and head 16. Cable mount 10 may be used to secure cable running along the top or bottom of a cable tray. Cable mount 10 is preferably constructed of plastic, but may comprise a variety of other materials, including various types of metal. Cable mount 10 may be injection molded.

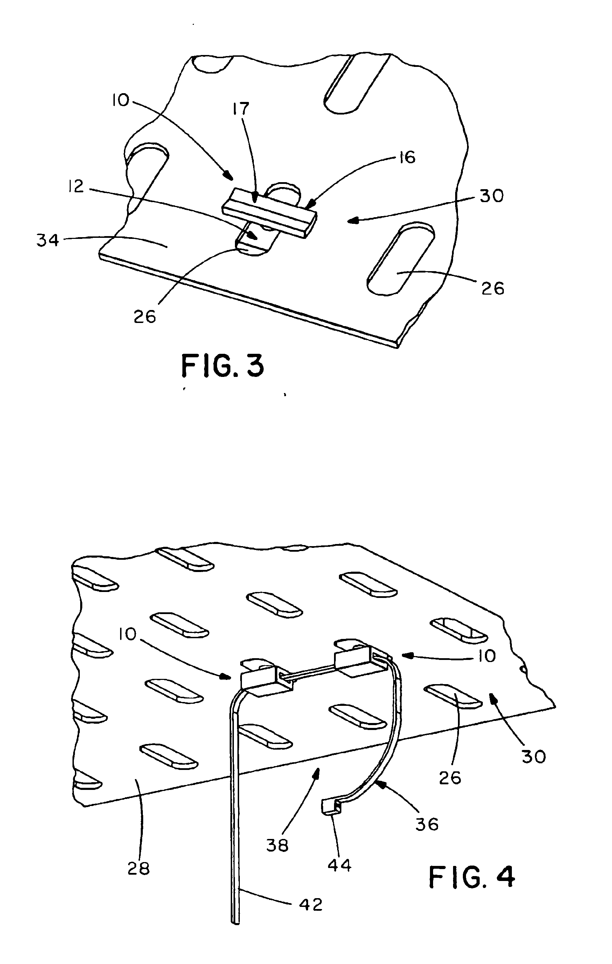

Referring to Figs. 2 and 3. cable mount 10 may comprise a beveled head 16. Head 16 may comprise top surface 17 and bottom surface 19. One or both of top and bottom surface 17 and 19 may comprise beveled or angled portion, defined by first surface 21 and second surface 23 intersecting at apex 25 and forming an obtuse angle. Although head 16 is shown in the shape of a rectangle, head may take other shapes, such as triangular and round.

Head 16 is sized and shaped to pass through an opening in a cable tray. Securement of head 16 to cable tray is accomplished by passing head 16 through the opening and rotating. That is. once head 16 passes through the opening, head 16 may be repositioned or realigned to create an interference with the opening, thereby preventing head 16 from being removed back through the opening. Specifically, securement may advantageously be accomplished by manually rotating head 16 less than about 180 degrees, such that a length of head 16 is transverse to a length of the opening. In another embodiment. head may be rotated less than about 90 degrees for securement. Thus, head 16 is positionable in a first secured position. wherein the length of head 16 is transverse to the length of the opening, thereby preventing the head from being removed through the opening and a second unsecured position. wherein the length of the head is aligned with the length of the opening, thereby allowing free removal of the cable mount from the opening. In either instance. securement and release of head 16 does not require the use of tools.

Base 12 includes top surface 18 and may include opposing bottom surface 20. Base 12 defines slot 22, which extends from side surface 24 through the interior of base 12 to opposing side surface (hidden from view) to form an opening between the opposing side surfaces. Slot 22 may be utilized to run a cable tie or other compatible device through the interior of base 12. Although base 12 and slot 22 are shown as being rectangular. they may exhibit a variety of shapes. sizes. configurations and orientations.

Fig. 2 illustrates insertion of head 16 into opening 26 through bottom surface 28 of cable tray 30. As best seen in Figs. 2 and 3, opening 26 comprises a larger length dimension than width dimension, and the length of opening 26 is larger than the length of head 16. Due to this configuration. head 16 may be inserted into opening 26 through bottom surface 28 of cable tray 30. and then pushed upwardly and completely through opening 26.

Once head 16 clears opening 26. as shown in Fig. 3. cable mount 10 is rotated to create an interference between bottom surface 19 of head 16 and top surface 34 of cable tray 30. such that bottom surface 19 of head 16 abuts top surface 34 of cable tray 30. As best seen in Fig. 3. a length of head 16 is typically positioned in a transverse relationship to the length of opening 26. Preferably, a distance measured from apex 25 of head 16 to top surface of base 12 is slightly less than the thickness of cable tray 30. This creates an interference fit and secures cable mount 10 because the width of opening 26 is smaller than the length of head 16. As a result, cable mount 10 does not slip down and out of opening 26. In addition. because the width of head 16 is typically larger than the width of opening 26, cable mount 10 cannot be pulled up and out of opening 26.

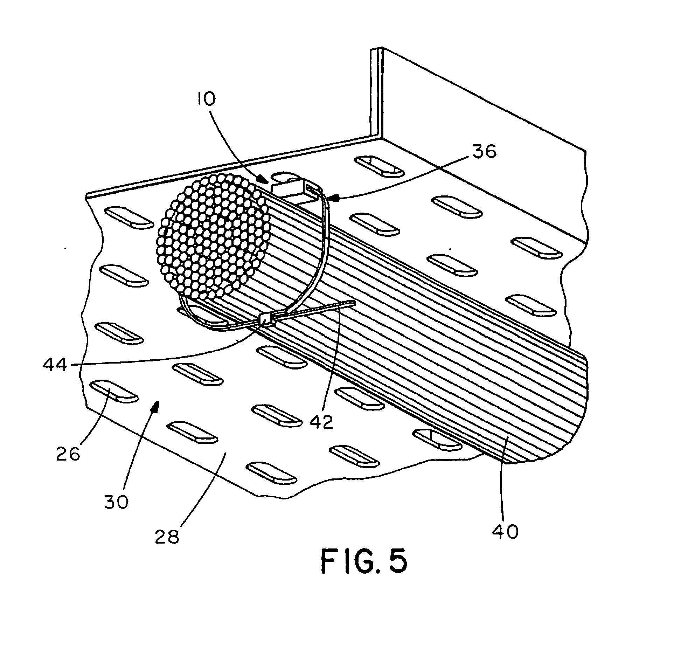

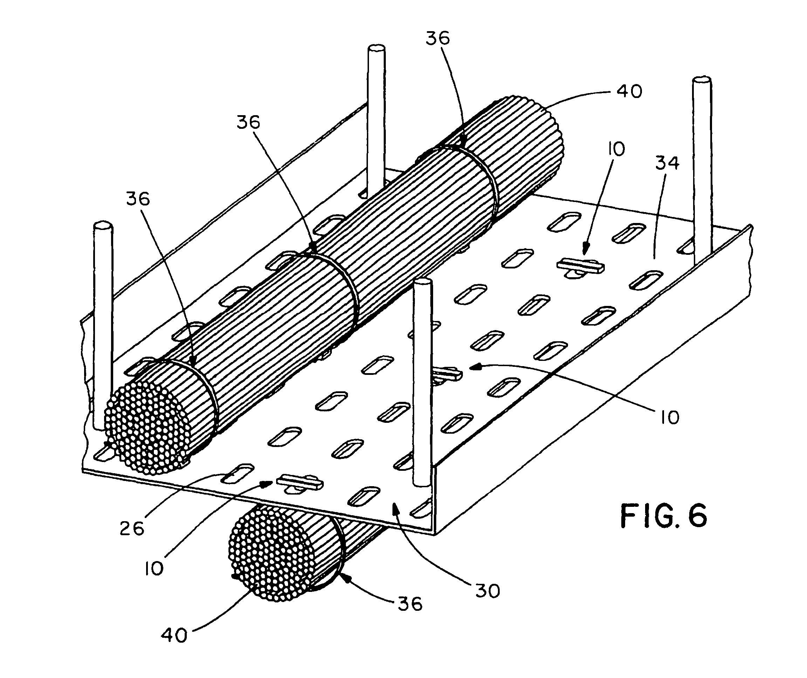

Figs. 4, 5 and 6 illustrate the use of multiple cable mounts 10 inserted into different openings 26 within cable tray 30. As shown in Fig. 4. two cable tie mounts 10 may be inserted into adjacent openings 26. Alternatively. as shown in Fig. 6. multiple cable mounts 10 may be inserted into spaced-apart openings 26 of cable tray 30. In either case, cable mounts 10 may be rotated to position the length of head 16 transverse to the respective lengths of openings 26. Cable tie 36 may then be inserted into and extended through slot 22 to form partial loop 38, as best seen in Fig. 4. One or more cables 40 may be extended through each of loops 38, followed by securement of end 42 of cable tie 36 to cable tie head 44 to complete loop 38. as shown in Fig. 5. As best seen in Fig. 6, cables 40 may run along the top and/or bottom surface of cable tray 30 utilizing cable tie mounts 10.

With cable tie 36 positioned within two or more cable tie mounts 10 (as shown in Fig. 4) or cable tie 36 positioned within a single cable mount 10 and carrying a cable bundle (as shown in Fig. 6), cable mounts 10 resist substantial rotation. Thus, each cable mount 10 is substantially locked in place to avoid rotation and unwanted slippage out of openings 26.

To change the positioning of cables 40. cable ties 36 are cut and removed or released and removed. Cable mounts 10 may then be rotated to slip heads 16 of cable mounts 10 out of openings 26. This allows users to reconfigure the location of cable mounts 10 within cable tray 30 for repositioning cables 40.

It should be appreciated by those skilled in the art that modifications to the embodiments described herein may be made without departing from the contemplated scope of the present invention. Accordingly, the embodiments described herein are intended to be illustrative rather than limiting, the scope of the invention being set forth in the claims appended hereto.

## Claims

1. A cable mount for use with a cable tray comprising an opening. said cable mount comprising:
a base for carrying a cable bundle. the base comprising a top surface. a bottom surface and opposing sidewalls. the opposing sidewalls defining a slot for receipt of a cable tie;
a shaft comprising a top surface and a bottom surface. said bottom surface of said shaft connected to said base;
a head connected to said shaft. said head comprising a top surface and a bottom surface. said bottom surface of said head comprising a beveled portion defined by a first surface and a second surface intersecting at an apex and forming an obtuse angle.

2. The cable mount of claim 1. wherein said head is sized and shaped to pass through said opening.

3. The cable mount of claim 1. wherein said head and said opening each comprise a length and a width and wherein said cable mount is positionable in a first secured position. wherein said length of said head is transverse to said length of said opening, thereby preventing said head from being removed through said opening and a second unsecured position. wherein said length of said head is aligned with said length of said opening. thereby allowing removal of said cable mount from said opening.

4. The cable mount of claim 1. wherein said cable mount is capable of securement to said cable tray through positioning said head in said opening and rotating said head by less than about 180 degrees.

5. The cable mount of claim 1. wherein said cable mount is capable of securement to said cable tray through positioning said head in said opening and rotating said head by no more than about 90 degrees.

6. The cable mount of claim 1. wherein said top surface of said head is beveled.

7. The cable mount of claim 1, wherein a distance measured from said apex of said head to said top surface of said base is less than a thickness of said cable tray.

8. The cable mount of claim 1, wherein said first and second surfaces extend upwardly toward said top surface of said head.

9. The cable mount of claim 1. wherein said cable mount is capable of being secured to said cable tray without the use of tools.

10. A cable mount for use with a cable tray comprising an opening, said cable mount comprising:
a base comprising a top surface, a bottom surface and opposing sidewalls, said opposing sidewalls defining a slot for receipt of a cable tie;
a shaft comprising a top surface and a bottom surface, said bottom surface of said shaft connected to said top surface of said base;
a head connected to said top surface of said shaft, said head comprising an angled portion. said angled portion defined by a first surface and a second surface intersecting at an apex.

11. The cable mount of claim 10, wherein said head is sized and shaped to pass through said opening.

12. The cable mount of claim 10. wherein said head and said opening each comprise a length and a width and wherein said cable mount is positionable in a first secured position, wherein said length of said head is transverse to said length of said opening, thereby preventing said head from being removed through said opening and a second unsecured position, wherein said length of said head is aligned with said length of said opening, thereby allowing removal of said cable mount from said opening.

13. The cable mount of claim 10, wherein said cable mount is capable of securement to said cable tray through positioning said head in said opening and rotating said head by less than about 180 degrees.

14. The cable mount of claim 10, wherein said cable mount is capable of securement to said cable tray through positioning said head in said opening and rotating said head by no more than about 90 degrees.

15. The cable mount of claim 10. wherein a distance measured from said apex of said head to said top surface of said base is less than a thickness of said cable tray.

16. The cable mount of claim 10. wherein said first and second surfaces extend upwardly toward said top surface of said head.

17. The cable mount of claim 10, wherein said cable mount is capable of being secured to said cable tray without the use of tools.

18. A cable mount for use with a cable tray comprising an opening comprising a length, said cable mount comprising:
a base comprising a top surface, a substantially planar bottom surface and opposing sidewalls, said bottom surface for carrying a cable bundle and said opposing sidewalls defining a slot for receipt of a cable tie for securing said cable bundles;
a shaft comprising a top surface and a bottom surface, said bottom surface of said shaft connected to said top surface of said base;
a head connected to said top surface of said shaft and comprising a length and a width. wherein said cable mount is capable of securement to said cable tray without the use of tools through positioning said head in said opening and rotating said head by less than about 180 degrees. wherein said securement is accomplished through positioning said length of said head transverse to said length of said opening, thereby preventing said head from being removed through said opening.

19. The cable mount of claim 18. wherein said cable mount is capable of securement to said cable tray through positioning said head in said opening and rotating said head by no more than about 90 degrees.
